(19) Europäisches Patentamt

European Patent Office

Office européen des brevets

(11) Publication number: **0 220 464**
**A2**

## (12) EUROPEAN PATENT APPLICATION

(21) Application number: **86112844.5**

(22) Date of filing: **17.09.86**

(51) Int. Cl.⁴: **G06F 9/24**

(30) Priority: **23.10.85 JP 235102/85**

(43) Date of publication of application:
**06.05.87 Bulletin 87/19**

(84) Designated Contracting States:
**DE FR GB**

(71) Applicant: **MITSUBISHI DENKI KABUSHIKI KAISHA**
**2-3, Marunouchi 2-chome Chiyoda-ku**
**Tokyo 100(JP)**

(72) Inventor: **Ikeo, Tadashi**
**325, Kamimachiya**
**Kamakura-shi Kanagawa-ken(JP)**

(74) Representative: **Pfenning, Meinig & Partner**
**Mozartstrasse 17**
**D-8000 München 2(DE)**

(54) **Program loading method.**

(57) A method of loading a program into a remote station of a self-contained control program type, which is connected through a communication line to a key station which is connected to a host computer, which comprises the steps of loading a boot strap loader from an auxiliary memory unit into a main memory unit, both of which are provided in the remote station, at the start of an operation of said remote station; loading a control program which has been transferred from the host computer into the main memory unit in response to a LOAD command from the key station under the control of the loaded boot strap loader, and writing the control program into the auxiliary memory unit; and loading the control program from the auxiliary memory unit into the main memory on the occurrence of an obstacle in response to the LOAD command from the key station under the control of the boot strap loader.

Fig. I

## PROGRAM LOADING METHOD

This invention relates to a program loading method and, in particular, to a program loading method for loading a control program into a main memory (which will be called "MMU" for short) in a remote station which utilizes a program control system, in accordance with a load command from a key station.

Fig. I shows a block diagram of a general communication system which utilizes a program control system, and numeral I designates a host computer, 2 designates a key station, 3 designates a channel connecting the host computer I and the key station 2, 4 designates a communication line, 5 designates a remote station which is connected to the key station 2 through the communication line 4, 6 designates a central processing unit ("CPU"), 7 designates the MMU, 8 designates a line control unit ("LCU"), 9 designates a service processor ("SVP"), I0 designates an auxiliary memory unit - ("AMU"), and II designates a terminal connected to the LCU 8.

A conventional control program loading method will next be explained with respect to the communication system. Heretofore, there have been the following control program loading methods which are here called method A, method B and method C for the sake of convenience.

According to the method A, a memory medium in which a boot strap loader (which will be called "a boot" for short) and the control program have been stored is set in the AMU I0 and then an operator at the remote station 5 operates the terminal II, so that the boot and the control program are loaded into the MMU 7.

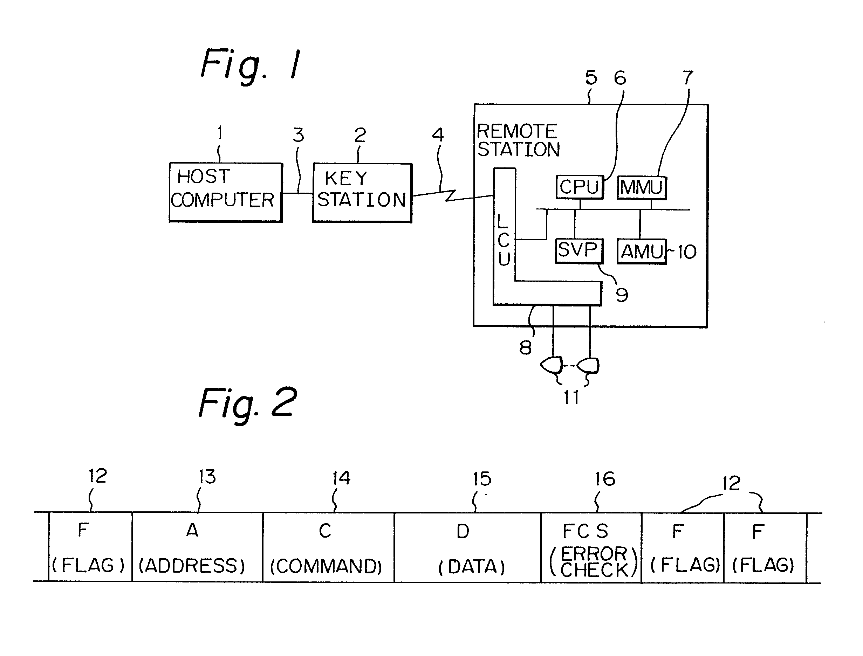

According to the methods A and B, the control program is loaded from the host computer I through the communication line 4 and a minimum function which processes a line control procedure to be executed in such case must be provided for the boot in the remote station 5. One embodiment in which a high level data link control procedure - ("HDLC") is used will be explained. A frame format of the HDLC is shown in Fig. 2 in which numeral I2 designates a flag F, I3 designates an address field A, I4 designates a command field C, I5 designates a data field D, and I6 designates an error check code field or field check sequence ("FCS").

Specifically, according to the method B, the operator at the remote station 5 sets the memory medium which has stored the boot into the AMU I0 and then proceeds to load the boot into the MMU 7. Thus, the remote station receives a load command from the key station 2 so that the control program from the host computer I is loaded into the MMU 7 under the control of the boot.

On the other hand, according to the method C, the LCU 8 in the remote station 5 is provided for a hardware function which loads the data field I5 of the frame into a specified and subsequent addresses of the MMU 7 when the address field I3 and the command field I4 of the HDLC are decoded, that station is addressed and the boot load command is identified, so that the boot which is transferred from the key station 2 by the data field of the frame is loaded into the MMU 7 and then the load command from the key station 2 is received under the control of the boot so as to load the control program from the host computer I into the MMU 7.

It is noted that all of these methods A, B and C are obliged to perform the loading of the control program in accordance with the same procedure at both the start of an operation and the occurrence of an obstacle.

Furthermore, in the conventional method A, the control program is stored in the AMU I0 in the remote station 5. It is necessary to preset parameters for such control program according to the communication system, such as the constitution of the terminals connected to the remote station and the protocol of the communication line, and it is necessary therefore to prepare a memory medium which is exclusively adapted to the remote station 5 and to set it in the AMU I0 in the remote station.

In the methods B and C, when the boot or the control program is loaded, the operator must operate the terminal at the remote station.

In the methods B and C, the loading of the control program wastes time, because it must always be performed from the key station through the communication line.

Also, in the method C, in order to load the boot from the host computer I into the MMU 7, it is necessary to provide hardware having a function which loads the data field I5 into the MMU 7 only when the address field I3 and the command field I4 of the HDLC frame are decoded and the boot load command to that remote station is received.

As described above, each of the methods has disadvantages and, in addition, involves a problem in that the communication system cannot be rapidly re-started up on the occurrence of an obstacle.

The disadvantages or problems described above can be overcome by the present invention.

It is an object of the present invention to provide an improved program loading method which makes it possible to provide an unmanned remote station at the time of re-loading a program when an obstacle occurs, and to reduce the re-loading time, that is, the time for repairing the obstacle, without modifying the conventional hardware constitution or exclusively setting the memory medium in each of the remote stations.

Another object of the present invention is to provide a program loading method comprising the steps of loading the boot from the AMU to the remote station at the start of an operation of the remote station; loading a control program, which has been transferred from a host computer, into the MMU under the control of the boot; storing the transferred control program in the AMU; and on the occurrence of an obstacle loading, the control program from the AMU into the MMU under the control of the boot, in response to the LOAD command from the key station.

According to the present invention, when the operation of the remote station is started, the boot is loaded from the AMU into the MMU by the operator at the remote station, and then under the control of the boot the control program which has teen transferred from the host computer is stored in the AMU and is immediately loaded from the AMU into the MMU. Subsequently, the normal operation can be performed. If an obstacle then occurs, after the obstacle information in the MMU has been transferred in safety to the AMU, the boot is automatically loaded from the AMU into the MMU and is readied for the LOAD command from the key station. When the remote station receives the LOAD command from the key station, the control program which has been previously stored in the AMU is loaded into the MMU under the control of the boot. Then, the communication system can be returned to the normal operation of communication.

Also, according to the present invention, since the initial loading of the control program into the remote station is executed from the key station and, after that, the re-loading is executed from the AMU in the remote station, it is not necessary for each of the remote stations to have a memory medium for storing an exclusive control program and it is possible, therefore, to easily standardize the control program and to provide an unmanned remote station.

In addition, according to the present invention, since the time for recovering from an obstacle state can be reduced, it is possible to increase the reliability of the communication system.

Fig. I shows a block diagram of a general communication system which utilizes a program control system, to which the present invention and the prior arts can be applied;

Fig. 2 shows a frame format of a high level data link control ("HDLC") procedure which may be utilized for the present invention and the prior arts; and

Fig. 3 is a flow chart showing a series of steps embodying the program loading method of the present invention.

One embodiment of the present program loading method will next be explained. The hardware constitution of the present invention is the same as that of the conventional system and, therefore, the present invention will be explained with reference to Fig. I which shows a block diagram of the communication system.

Also, the preferred embodiment will be explained in a case where the above-described HDLC is utilized as a communication line control procedure.

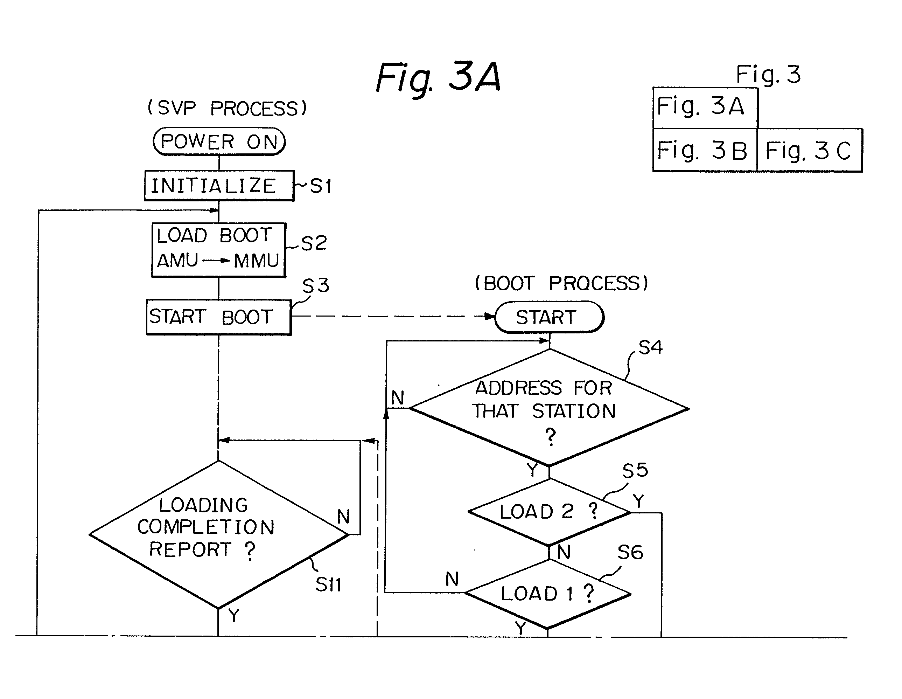

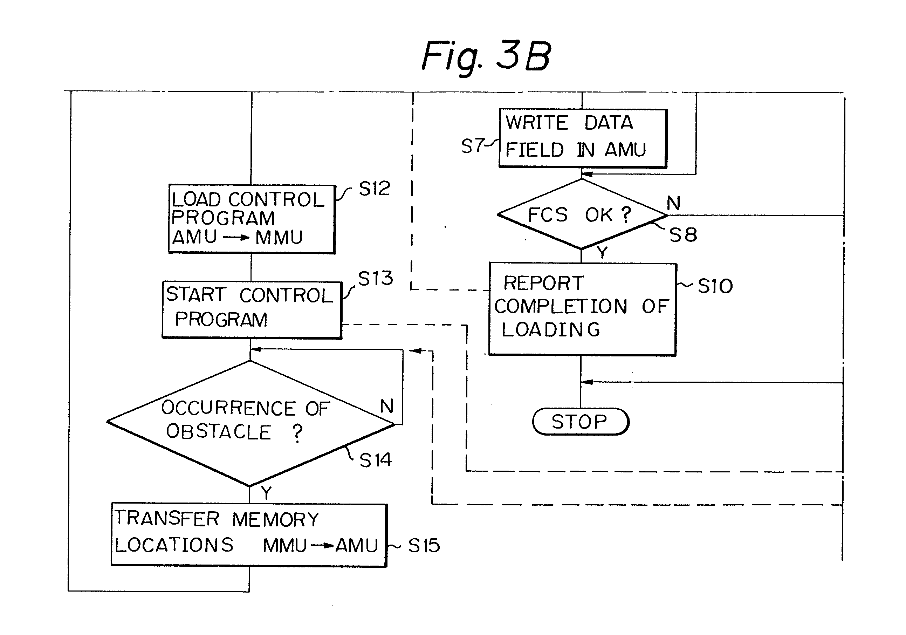

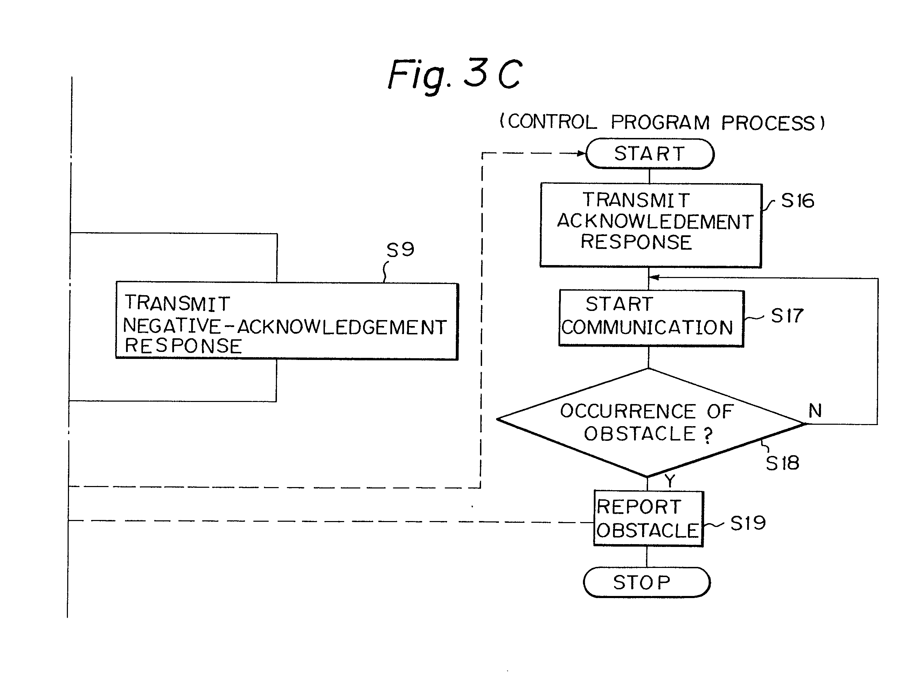

Fig. 3 is a flow chart showing a series of steps embodying the program loading method of this invention.

As shown in Fig. 3, at the start of an operation of the remote station 5, the operator intends to turn on a power source and, if necessary, to initialize the remote station from the terminal II thereof. When the power source is turned on, after the initializing process of the remote station 5 (Step SI in Fig. 3), the SVP 9 processes the boot to be loaded from the AMU I0 to the MMU 7 (S2) and causes the CPU 6 to start the processing of the boot (S3). On the basis of these steps, it is possible to receive the data on the HDLC procedure from the communication line 4. It is to be noted here that the key station 2 transmits a LOAD I command at the start of an operation of the remote station 5, while it transmits a LOAD 2 command when the re-loading of the program is operated on the occurrence of an obstacle.

The boot is always executed to perform monitoring whether or not the received data from the communication line 4 corresponds to an address for that remote station (S4) and, when the LOAD I command addressed to that remote station is received (S6), the control program which is transmitted as the data field I5 of the frame is written into the AMU in sequence (S7). Then, when the flag pattern F I2 is detected, the preceding FCS I6 of two bytes is checked to thereby judge whether the data has been properly received (S8). If an unusual state is found, a negative-acknowledgement response is transmitted back to the key station (S9). When the negative-acknowledgement response is received, the key station 2 transmits the LOAD I command again to the remote station. If the normal state is found, the boot is executed to report to the SVP 9 the completion of the loading into the AMU I0 and to thereby stop the operation (SI0).

On the other hand, after the start of the boot has been instructed, the SVP 9 operates to monitor whether or not the completion of the loading (SI0) has been reported (SII). In this state, when the completion report is received, the control program is loaded from the AMU l0 into the MMU 7 (Sl2) and then an acknowledgement □ response transmitting routine of the control program processed by the CPU 6 is started (Sl3). Thus, the remote station 5 starts through the acknowledgement □ response transmitting process (Sl6) the normal operation of communication (Sl7). Then, the completion of the loading is signalled to the key station 2 and the operation of the communication system is correspondingly started.

Re-loading of the program will now be explained for the case where an obstacle occurs during the operation of the communication system and the control program in the remote station 5 is abnormally completed. If an obstacle occurs during the operation of communication (Sl8), the control program is executed to report the occurrence of the obstacle to the SVP 9 and to thereby stop the operation (Sl9). After the control program has been started, the SVP 9 is always operated to monitor whether or not an obstacle has occurred (Sl4) and, if an obstacle occurs, memory locations in the MMU 7, which may be destroyed by the obstacle information and the loading of the boot, are transferred in safety to the AMU l0 (Sl5), and then the boot is automatically loaded from the AMU l0 into the MMU 7 (S2) and is started in sequence (S3). As a result, the boot enters into a state in which the remote station is readied for the receipt of data from the key station 2 (S4).

The key station 2 can detect the obstacle in the remote station in response to the obstacle report or non-response from the remote station 5 to thereby transmit the LOAD 2 command. This command is not accompanied by the data field l5 including the control program. When the remote station receives the LOAD 2 command which has been addressed to that station, the boot is executed to check the FCS l6 and to immediately report the completion of the loading to the SVP 9. The SVP 9 is operated to load into the MMU 7 the control program which has been stored in the AMU l0 at the start of the operation and after that, is operated in the same manner as that at the start of the operation.

## Claims

l. A method of loading a program into a remote station of a self-contained control program type, which is connected through a communication line to a key station which is connected to a host computer, said method characterized by the steps of:

loading a boot strap loader from an auxiliary memory unit into a main memory unit, both of which are provided in said remote station, at the start of an operation of said remote station;

loading a control program which has been transferred from said host computer into said main memory unit in response to a LOAD command from said key station under the control of the loaded boot strap loader, and writing said control program into said auxiliary memory unit; and

loading said control program from said auxiliary memory unit into said main memory on the occurrence of an obstacle in response to the LOAD command from said key station under the control of said boot strap loader.

2. The program loading method as set forth in Claim l, wherein said boot strap loader includes a high level data link control procedure.

3. The program loading method as set forth in Claim l or 2, further including the steps of transferring to said auxiliary memory on the occurrence of an obstacle unit memory locations in said main memory, which are destroyed by the obstacle information and the loading of said boot strap loader, and automatically loading said boot strap loader from said auxiliary memory unit into said main memory.

## Fig. 1

## Fig. 2

| F | A | C | D | FCS | F | F |
|---|---|---|---|---|---|---|
| (FLAG) | (ADDRESS) | (COMMAND) | (DATA) | (ERROR CHECK) | (FLAG) | (FLAG) |

0 220 464

# Fig. 3A

0 220 464

Fig. 3

| Fig. 3A | |
|---|---|
| Fig. 3 B | Fig. 3 C |

(SVP PROCESS)

(POWER ON)

INITIALIZE — S1

LOAD BOOT AMU → MMU — S2

START BOOT — S3

(BOOT PROCESS)

START

ADDRESS FOR THAT STATION ? — S4 — N

Y

LOAD 2 ? — S5 — Y

N — S6

LOAD 1 ? — N

Y

LOADING COMPLETION REPORT ? — N

S11

Y

# Fig. 3B

0 220 464

# Fig. 3 C

(CONTROL PROGRAM PROCESS)